Europäisches Patentamt

European Patent Office

Office européen des brevets

(11) Veröffentlichungsnummer: **0 114 655**

**A1**

# (12) EUROPÄISCHE PATENTANMELDUNG

(21) Anmeldenummer: **84100489.8**

(22) Anmeldetag: **18.01.84**

(51) Int. Cl.³: **F 16 J 9/00**
**C 04 B 35/48**

(30) Priorität: **21.01.83 DE 3301913**

(43) Veröffentlichungstag der Anmeldung:
**01.08.84 Patentblatt 84/31**

(84) Benannte Vertragsstaaten:
**BE DE FR GB IT NL SE**

(71) Anmelder: **Feldmühle Aktiengesellschaft**
**Fritz-Vomfelde-Platz 4**
**D-4000 Düsseldorf 11(DE)**

(72) Erfinder: **Fingerle, Dieter, Dr. Dipl.-Ing.**
**Kirchheimer Strasse 34**
**D-7311 Hochdorf(DE)**

(72) Erfinder: **Dworak, Ulf, Dr. Dipl.-Mineraloge**
**Pfarrstrasse 50**
**D-7066 Baltmannsweiler 2(DE)**

(72) Erfinder: **Krohn, Ulrich, Dr. Dipl.-Ing.**
**Elsterweg 8**
**D-7520 Leonberg 1(DE)**

(72) Erfinder: **Olapinski, Hans, Dr. Dipl.-Chem.**
**Talstrasse 12**
**D-7307 Aichwald 1(DE)**

(74) Vertreter: **Uhlmann, Hans, Dr. rer.nat., Dipl.-Chem.**
**Gladbacher Strasse 189**
**D-4060 Viersen 1(DE)**

(54) **Kolbenring für eine Verbrennungskraftmaschine.**

(57) Ein unter Verwendung keramischer Werkstoffe hergestellter Kolbenring (1) für eine Verbrennungskraftmaschine besteht aus einem durch Sintern hergestellten Formkörper aus teilstabilisiertem Zirkonoxid (PSZ), das eine Porosität < 3 % aufweist, und die Lauffläche (4) des Kolbenrings weist einen Mittenrauhwert $R_a$ von 0,03 bis 0, 1 μm auf.

Infolge seines homogenen Aufbaus vermeidet der Kolbenring (1) die von den bekannten Kolbenringen bekannte Problematik des Keramik-/Metallverbundes und führt auch bei hoher Temperaturbelastung weder zu thermisch induzierten Zerstörungserscheinungen noch zu einem Verschweißen in der Kolbenringnut.

_Fig. 1_

- 1 -

## Kolbenring für eine Verbrennungskraftmaschine

Die vorliegende Erfindung betrifft einen unter Verwendung von keramischem Werkstoff hergestellten Kolbenring für eine Verbrennungskraftmaschine.

Aus der Praxis sind aus Guß oder Stahlwerkstoffen bestehende Kolbenringe bekannt, die vielfach jedoch zusätzlich verchromt sind oder an ihren Laufflächen eine Hartmetallbeschichtung, z.B. aus Molybdän aufweisen. Ein solcher Vorschlag findet sich in der DE-OS 14 26 120, wo Molybdän oder Tantal zur Laufbahnbeschichtung von Kolbenringen vorgeschlagen wird. Ein weiterer Vorschlag dieser DE-OS sieht eine Kolbenringbeschichtung aus hochharten Metallverbindungen, wie z.B. Carbiden, Oxiden, Nitriden, Boriden, Siliziden und anderen vor. Ein in der DE-OS 19 50 081 enthaltener Vorschlag sieht auf der Außenwand eines Ölabstreifringes eingestochene Nuten vor, in die durch Sprühablagerung bzw. Metallisierung Metalloxide oder Metallcarbide eingebracht werden. Weitere Vorschläge, wie sie in der DE-AS 26 20 104, der DE-OS 29 26 879, der DE-OS 29 34 027, der DE-OS 29 38 151, der DE-OS 29 42 037, der DE-OS 30 17 907 und der DE-OS 31 02 221 enthalten sind, sehen

Metallcarbidbeschichtungen oder Beschichtungen aus Metall-/ Metallcarbidmischungen vor, die z.B. mittels Plasmastrahlauftrags auf den Laufflächen von Kolbenringen aufgetragen werden.

Der gemeinsame Nachteil aller dieser Vorschläge liegt in der Problematik der Keramik/Metallverbindung, die darin besteht, daß Materialien unterschiedlicher Wärmeausdehnung bei thermischer Belastung einen verschiedenen Ausdehnungsgrad aufweisen und infolge dessen die Gefahr des Abplatzens der aufgetragenen Schichten gegeben ist. Diese Gefahr besteht besonders bei Kolbenringen, die mit schlecht leitenden Werkstoffen beschichtet sind, weil solche Kolbenringe die beim Verbrennungsprozeß entstehende Wärme nicht an die Zylinderwände ableiten können. Eine weitere Gefahr für lediglich an ihrer Lauffläche beschichtete Kolbenringe besteht darin, daß sich in der Kolbenringnut zwischen dem Material des Kolbens und dem Metall des Kolbenrings infolge der hohen Hitze verschweißähnliche Erscheinungen bilden, die die Beweglichkeit des Kolbenrings beeinträchtigen. Ein weiterer Nachteil der beschichteten Kolbenringe liegt in dem komplizierten Aufbau der Schichten und der dafür erforderlichen Herstellungsverfahren. Nachteilig ist auch die aus der DE-OS 29 42 037 bekanntgewordene Forderung nach relativ hohen Porositätsgraden, wobei noch eine Porosität bis zu 20 % als zulässig angesehen wurde, bei der DE-OS 29 38 151 sogar eine solche bis zu 30 %. Diese relativ porösen Schichten haben naturgemäß relativ geringe Festigkeiten und unterliegen einem hohen Verschleiß.

Die Aufgabe der vorliegenden Erfindung liegt in der Überwindung der bekannten Schwierigkeiten, wobei die Erfindung ausgehend von den bekannten günstigen Gleiteigenschaften und guten Notlaufeigenschaften der mit Keramikwerkstoffen beschichteten Kolbenringe ausgeht. Es soll folglich ein Kolbenring zur Verfügung gestellt werden, der infolge seines homogenen Aufbaus die aufgezeigte Problematik des Keramik-/ Metallverbundes vermeidet und auch bei hoher Temperaturbelastung weder thermisch induzierte Zerstörungserscheinungen noch ein Verschweißen in der Kolbenringnut aufweist. Gleichzeitig soll ein Kolbenring geschaffen werden, der eine hohe mechanische Verschleißfestigkeit gegenüber Zylinderlaufbüchsen beliebigen Materials und dadurch eine gegenüber den bekannten Kolbenringen weiter verbesserte Lebensdauer besitzt.

Zur Lösung dieser Aufgabe schlägt die Erfindung einen unter Verwendung von keramischen Werkstoffen hergestellten Kolbenring vor, der dadurch gekennzeichnet ist, daß er aus einem durch Sintern hergestellten Formkörper aus teilstabilisiertem Zirkonoxid (PSZ) besteht, das eine Porosität < 3 % aufweist, und daß die Lauffläche des Kolbenrings einen Mittenrauhwert $R_a$ 0,03 bis 0,1 µm besitzt.

- 4 -

Der erfindungsgemäße Kolbenring vermeidet infolge seines einheitlichen Aufbaus aus einem einheitlichen und homogenen Werkstoff die von den üblichen Kolbenringen bekannte Gefahr des Abplatzens der Beschichtung. Durch die hohe Warmfestigkeit des aus teilstabilisiertem Zirkonoxid bestehenden Kolbenrings ist auch sichergestellt, daß sich keine verschweißähnlichen Erscheinungen mit der Kolbenringnut bilden. Ein weiterer Vorteil, der sich aus der Verwendung von teilstabilisiertem Zirkonoxid ergibt, liegt darin, daß dieser Werkstoff nicht zum Verzundern mit aus den Verbrennungsgasen sich bildenden Rückständen neigt, wie dies teilweise bei metallischen Kolbenringen der Fall ist. Der entscheidende Vorteil der vorliegenden Erfindung liegt aber in der hohen mechanischen Verschleißfestigkeit des durch Sintern hergestellten und aus teilstabilisiertem Zirkonoxid bestehenden Kolbenrings. Die hohe Verschleißfestigkeit ist dabei um so überraschender, als ein Kolbenring aus gesintertem teilstabilisiertem Zirkonoxid zwar härter als die bekannten metallischen Kolbenringe ist, jedoch eine wesentlich geringere Härte aufweist als z.B. gesintertes Siliziumcarbid.

Von ganz wesentlicher Bedeutung für die Verschleißfestigkeit des erfindungsgemäßen Kolbenringes ist die im Vergleich zu bekannten Kolbenringen außerordentlich geringe Porosität < 3 %, bevorzugt sogar < 1,5 %. Nur bei Einhaltung dieses

- 5 -

geringen Porositätswertes verfügt der Kolbenring über eine für sein Verschleißverhalten ausreichende Gefügefestigkeit.

Im Rahmen der vorliegenden Erfindung ist in Beschreibung und Patentansprüchen unter teilstabilisiertem Zirkonoxid ein Zirkonoxid zu verstehen,
das einen homogenen Gefügeaufbau besitzt und aus
in der kubischen Modifikation vorliegenden Körnern,
in denen tetragonale Ausscheidungen vorliegen,
besteht.

In einer bevorzugten Ausführungsform besteht der
erfindungsgemäße Kolbenring aus einem durch Sintern hergestellten Formkörper aus Zirkonoxid,
das mit einem oder mehreren Oxiden des Magnesiums,
Kalziums oder Yttriums teilstabilisiert ist, wobei Magnesiumoxid besonders bevorzugt ist, insbesondere in einer Menge von 2,7 bis 3,2 Gew.%, bezogen auf Zirkonoxid. Bei einem mit Magnesiumoxid
in dieser Menge teilstabilisierten Zirkonoxid
liegt ein Maximum der Festigkeit und damit der
Verschleißfestigkeit vor.

In einer weiteren ganz besonders bevorzugten Ausführungsform sieht die Erfindung einen Kolbenring
vor, der aus einem teilstabilisierten Zirkonoxid
besteht, das einen 80 Gew.% nicht überschreitenden
Anteil der kubischen Modifikation aufweist, wobei
der Anteil der tetragonalen Modifikation zwischen
20 und 60 Gew.% liegt und der Anteil der monoklinen

- 6 -

Modifikation nicht größer als 6 Gew.% ist, wobei sich die Anteile der einzelnen Modifikationen auf 100 Gew.% ergänzen. Der Vorteil eines aus solchem teilstabilisierten Zirkonoxid bestehenden Kolbenrings besteht in einer außerordentlich hohen Gefügegleichmäßigkeit, die dem Herausbrechen einzelner Körner und damit einem vorschnellen Verschleiß entgegensteht.

Wenn auch noch nicht restlos geklärt ist, worauf die hervorragenden Eigenschaften des erfindungsgemäßen Kolbenrings zurückzuführen sind, liegt doch die Vermutung nahe, daß hierfür die hohe Festigkeit des teilstabilisierten Zirkonoxids, gemessen als Biegebruchfestigkeit $\sigma_B$ verantwortlich ist. Als besonders geeignet ist daher für die vorliegende Erfindung ein teilstabilisiertes Zirkonoxid anzusehen, das eine Biegebruchfestigkeit von mindestens 400 MPa aufweist.

Infolge der hohen Härte des aus teilstabilisiertem Zirkonoxid bestehenden Kolbenrings gemäß der vorliegenden Erfindung, die als Vickers-Härte (Hv) gemessen bei mindestens $1,2 \times 10^4$ N/mm$^2$ liegt, findet beim Einlaufen eines Verbrennungsmotors der eigentliche Einlaufprozeß zwischen Zylinderlaufbüchse und Kolbenring beinahe ausschließlich an der Zylinderlaufbüchse statt. Die homogene Zusammensetzung des erfindungsgemäßen Kolbenrings und seine gleichmäßige Gefügestruktur wirkt dabei der Gefahr entgegen, daß es bereits beim Einlaufprozeß zu einer ungleichmäßigen Abarbeitung der beiden Reibungspartner, Zylinderwand und Kolbenring kommen kann. Der erfindungsgemäße Kolbenring bedarf auch nicht der bekannten Vorsichtsmaßnahme, auf dem Kolbenring eine speziell für den Einlaufprozeß vorgesehene und besonders rasch abreibende Beschichtung vorzunehmen.

Ein weiterer Vorteil des erfindungsgemäßen Kolbenrings liegt in dem im Vergleich zu einem Stahlring um 20 % niedrigeren Gewicht.

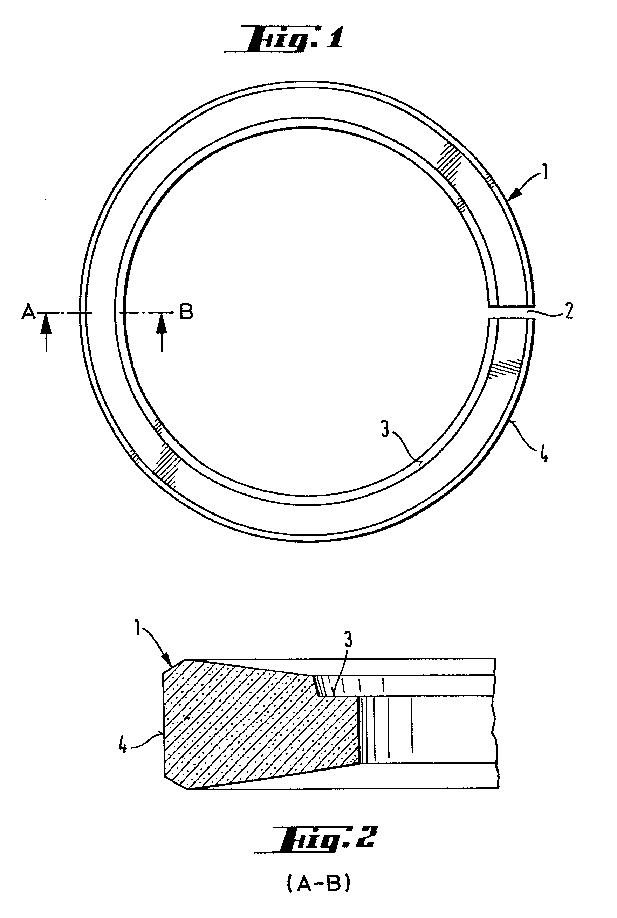

Die nachfolgenden Figuren 1 und 2 zeigen eine besonders bevorzugte Ausführungsform des erfindungsgemäßen Kolbenringes, ohne daß die Erfindung auf die gezeigte Ausführungsform beschränkt ist.

Figur 1 zeigt die Aufsicht auf einen Kolbenring 1 aus einem mit 2,9 Gew.% Magnesiumoxid teilstabilisiertem Zirkonoxid, mit einer Porosität von 1,4 % und einem Mittenrauhwert $R_a$ von 0,09 μm. Der Kolbenring weist einen Schlitz 2 auf.

Figur 2 zeigt in vergrößerter Darstellung einen Schnitt entlang der Linie A-B der Figur 1. Durch eine Innenfase 3 bildet sich die mit der nicht gezeigten Zylinderlaufbahn in Kontakt tretende Lauffläche 4 während des Betriebes in konischer Form aus.

- 8 -

Patentansprüche

1. Kolbenring für eine Verbrennungskraftmaschine, der unter Verwendung keramischer Werkstoffe hergestellt ist, dadurch gekennzeichnet, daß der Kolbenring (1) aus einem durch Sintern hergestellten Formkörper aus teilstabilisiertem Zirkonoxid (PSZ) besteht, das eine Porosität kleiner 3 % aufweist und daß die Lauffläche (4) des Kolbenrings (1) einen Mittenrauhwert $R_a$ von 0,03 bis 0,1 µm besitzt.

2. Kolbenring nach Anspruch 1, dadurch gekennzeichnet, daß das Zirkonoxid mit einem oder mehreren Oxiden des Magnesiums, Kalziums und Yttriums teilstabilisiert ist.

3. Kolbenring nach einem der Ansprüche 1 und 2, dadurch gekennzeichnet, daß das teilstabilisierte Zirkonoxid einen 80 Gew.% nicht überschreitenden Anteil der kubischen Modifikation aufweist, daß der Anteil der tetragonalen Modifikation zwischen 20 und 60 Gew.% liegt und daß der Anteil der monoklinen Modifikation nicht größer als 6 Gew.% ist, wobei sich die
Anteile der einzelnen Modifikationen auf
100 Gew.% ergänzen.

4. Kolbenring nach einem der Ansprüche 1 bis 3,
dadurch gekennzeichnet, daß die Biegebruchfestigkeit $\sigma_B$ des teilstabilisierten Zirkonoxids mindestens 400 MPa beträgt.

Fig. 1

Fig. 2

(A-B)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| Y | DE-A-3 200 549 (KENNECOTT)<br>* Seite 1, Anspruch 1 *<br><br>--- | 1 | F 16 J 9/00<br>C 04 B 35/48 |
| Y | EP-A-0 067 327 (TOKYO SHIBAURA DENKI KABUSHIKI)<br>* Seite 12 und Seite 13, Ansprüche 1-25 *<br><br>--- | 1,2 | |
| Y | GB-A-1 261 432 (DEGUSSA)<br>* Seite 1, Zeilen 1-84 *<br><br>--- | 1,2 | |
| A | US-A-4 316 964 (ROCKWELL)<br>* Spalte 3, Zeile 1 bis Spalte 4, Tabelle III *<br><br>--- | 2 | |
| A | EP-A-0 045 352 (MAN)<br><br>----- | | RECHERCHIERTE SACHGEBIETE (Int. Cl. ³)<br><br>F 16 J<br>C 04 B |

Der vorliegende Recherchenbericht wurde für alle Patentansprüche erstellt.

| Recherchenort<br>DEN HAAG | Abschlußdatum der Recherche<br>30-03-1984 | Prüfer<br>WASSENAAR G. |
|---|---|---|